# EUROPEAN PATENT SPECIFICATION

(11) **EP 2 697 551 B1**
(45) Date of publication and mention of the grant of the patent: **16.11.2016**
(21) Application number: 12721920.2
(22) Date of filing: 16.04.2012
(51) Int. Cl.: F16L 55/18, E21B 29/10, B29C 73/02

(54) **TUBING RESHAPING METHOD AND APPARATUS**
VERFAHREN UND VORRICHTUNG ZUR ROHRUMFORMUNG
PROCÉDÉ ET APPAREIL DE REPROFILAGE DE COLONNE

(30) Priority: 14.04.2011 GB 201106281
(43) Date of publication of application: 19.02.2014
(73) Proprietor: MÆRSK OLIE OG GAS A/S, 1263 Copenhagen K (DK)
(72) Inventor: MUSSIG, Siegfried, DK-K1263 Copenhagen (DK); PIROTTE, Fabrice, B-4845 Jalhay (BE); VEENKER, Christian, 30629 Hannover (DE); WAHRMANN, Klaus, 45549 Sprockhovel (DE)
(74) Representative: Docherty, Andrew John
(86) International application number: PCT/IB2012/000850
(87) International publication number: WO 2012/140512

(56) References cited:
- WO-A2-2008/073976
- DE-A1- 10 228 696
- DE-A1-102008 063 007
- JP-A- 62 160 019
- US-A- 5 794 663

## Description

### FIELD OF THE INVENTION

The present invention relates to a tubing reshaping apparatus and method for use in reshaping deformed tubing.

### BACKGROUND TO THE INVENTION

Tubing is used in many applications and industries and may be utilised to provide a communication path for the contained passage of fluids, particulates, equipment or the like. For example, tubing is widely used in the oil and gas industry, such as in drilling operations, completion operations, production operations, processing operations and the like. Tubing may also be used for support and sealing purposes, such as providing support and sealing within a drilled wellbore. However, in use, tubing may be subject to deformation, which may occur due to the application of forces which exceed design limits, occurrence of accidental damage and the like. For example, external radial forces, such as established by external pressure, may cause radial collapse of the tubing, axial forces may cause buckling or the like. In the event of such deformation remedial attention is required, which may involve replacement of the deformed tubing section. However, it is often the case that significant access issues exist, for example in situations where the deformed tubing forms part of a string or pipeline which extends into a wellbore, is buried, extends subsea or the like. In wellbore applications, for example, it may be necessary to retrieve the entire tubing string back to surface until the deformed section is reached to then be replaced, with the tubing again run into the wellbore. This process can be very time consuming and costly, for example due to production downtime.

Expansion techniques used on undamaged tubing are known in the art, such as swaging and rolling expansion, wherein swaging involves driving an expansion cone or other device axially through the tubing, and rolling expansion typically involves axially translating and rotating a tool carrying expandable rollers through a tubing section. However, such techniques impart significant axial and/or torsional forces on the tubing and accordingly these known expansion techniques may not be suitable for use in repairing damaged tubing sections as the deformation to be redressed may be such that axial and/or torsional forces cannot be supported, and may result in further, perhaps irreparable damage or deformation.

Inflatable bladders for use in expansion of tubular sections have also been proposed in the art, such as disclosed in WO 2008/073976. In such an arrangement a bladder is located within a section of a pipe requiring expansion, and then inflated. However, such inflatable bladders are used to expand undamaged tubing, such as tubing patches.

### SUMMARY OF THE INVENTION

According to a first aspect of the present invention there is provided a method for use in reshaping a deformed tubing section according to the appended claim 1.

The method comprises:
locating an inflatable bladder with an associated reinforcing structure of a tubing reshaping apparatus within a deformed tubing section while the inflatable bladder is at least partially collapsed; and
inflating the inflatable bladder with a fluid to radially expand said bladder to reshape the deformed tubing section.
It should be understood that the term "tubing" as used herein may be interchangeable with the term "tubular".

The method may comprise reshaping a radially deformed tubing section, such as a radially collapsed tubing section. In such an arrangement the radially deformed tubing section may define a restricted internal access, within which restricted internal access the inflatable bladder is located.

The method may comprise reshaping a buckled tubing section.

The method may comprise completely reshaping a deformed tubing section, for example by reshaping a deformed tubing section to a form similar to that prior to deformation.

The method may comprise partially reshaping a deformed tubing section.
The method may comprise locating the inflatable bladder within a deformed tubing section while in a partially or fully collapsed configuration.

The method may comprise collapsing the inflatable bladder prior to or during location of said bladder within the deformed tubing section. Such an arrangement may assist in insertion of the inflatable bladder within a deformed tubing section. The method may comprise collapsing the inflatable bladder by at least partially evacuating the bladder. Evacuation may be achieved via a fluid control arrangement, such as a pump assembly. In some embodiments the method may comprise partially inflating the bladder during or prior to insertion of the bladder within a deformed tubing section. This may provide a degree of stiffness within the bladder which may assist with insertion. The deformed tubing section may comprise a discrete portion of a tubing string. The tubing string may define or form part of a pipe line, such as may be used for the transportation of a fluid, such as water, hydrocarbons, chemicals, or the like.
The tubing string may define a wellbore tubing string such as production tubing string, injection tubing string, casing tubing string, liner tubing string etc.

The bladder may be flexible. Such flexibility may assist in insertion of the bladder within a deformed tubing section.

The method may comprise restraining the bladder with the reinforcing structure. The method may comprise radially retraining the bladder. The method may comprise axially restraining the bladder. Retraining the bladder may restrict radial and/or axial expansion of the bladder. Such an arrangement may prevent over inflation of the bladder, which may otherwise cause damage to the bladder and/or a tubular being reshaped. The method may comprise supporting or reinforcing the bladder with the reinforcing structure when said bladder is at a desired limit of inflation.

In use the bladder may be configured to provide appropriate fluid containment, and the reinforcing structure may be configured to carry appropriate loads caused by pressure internally of the bladder. The reinforcing structure may be configured to permit or limit a given radial expansion. Such a limit may represent a desired reshaping limit. Such a limit may be adjustable, or alternatively may be fixed during, for example, manufacture of the tubing reshaping apparatus. During a reshaping process radial forces established by inflation of the bladder will be carried by the tubing being reshaped. Upon reaching a limit of reshaping, which in embodiments of the present invention is defined by the reinforcing structure, radial forces may be carried by the reinforcing structure. Accordingly, the present invention may permit the bladder to be radially supported at substantially all times during a reshaping process to minimise the risk of damage during inflation thereof.

The method may further comprise transferring fluid between the bladder and a fluid control module. The method may further comprise cycling the bladder between at least partially collapsed and expanded configurations. For example, the method may comprise at least partially deflating the bladder to pass the bladder into the deformed tubing section at a first deformity; inflating the bladder to reshape the deformed tubing at the first deformity; at least partially deflating the bladder; repositioning the bladder, such as at a second deformity; reinflating the bladder to reshape the deformed tubing.

The method may further comprise plugging, such as completely sealing, the tubing with the inflated bladder.

The method may comprise detecting a deformed tubing section prior to reshaping said section. The method may comprise detecting a deformed tubing section using any appropriate means as would readily be selected by a person of skill in the art, such as by use of a calliper tool or the like. Following detection of a deformed tubing section the tubing reshaping apparatus may be utilised for reshaping. The tubing reshaping apparatus may comprise a detecting arrangement for detecting a deformed section of tubing.

The method may comprise anchoring the tubing reshaping apparatus within the tubing section, or within an adjacent tubing section. This may permit the apparatus to be fixed relative to the deformed tubing section.

According to a second aspect of the present invention there is provided a tubing reshaping apparatus for use in reshaping a deformed tubing section according to the appended claim 6.

The apparatus comprises a reshaping module configured to be located within a deformed tubing section and comprising an inflatable bladder to be inflated by application of fluid pressure to expand and reshape the deformed tubing section, wherein the reshaping module further comprises a reinforcing structure associated with the inflatable bladder.

The bladder may be mechanically restrained by the reinforcing structure. For example, the bladder may be mechanically restrained such that expansion of the bladder is restricted.

The bladder may be radially and/or axially restrained.

The reinforcing structure may at least partially encapsulate the bladder.

The reinforcing structure may be configured to limit or define an expanded shape of the bladder.

The apparatus may comprise a fluid control module configured for controlling inflation of the reshaping module. The fluid control module may be positioned adjacent to, for example immediately adjacent to the reshaping module. The provision of a fluid control module within the reshaping apparatus may eliminate the requirement and associated complications of controlling expansion from a remote location, such as a location externally of the tubing section.

In alternative arrangements the fluid control module, or one or more components thereof, may be located remotely from the reshaping module.

In use the apparatus may be located within a deformed tubing section and the fluid control module activated to inflate the bladder to achieve reshaping.

As the tubular reshaping apparatus is operational within a tubing section, said apparatus may be defined as an in-line expansion apparatus.

The fluid control module may be directly coupled to the reshaping module. The fluid control module and the reshaping module may define a tool string when coupled together.

The reshaping module may be located at an end portion of the apparatus, such as on a distal end of the apparatus. For example, the inflatable bladder may define a leading end of the apparatus. Alternatively, the reshaping module may be intermediate distal and proximal ends.

The bladder and/or the reinforcing structure may be flexible, which may assist in insertion of the reshaping module into a deformed tubing section.

The fluid control module may comprise a fluid reservoir containing fluid for use in inflating the bladder. The fluid control module may be configured to inflate the bladder using a fluid in the tubing, such as a fluid to be transported in the tubing.

The fluid control module may comprise a pump assembly or arrangement configured to selectively inflate the bladder. The pump assembly may comprise one or more pump units. The pump units may be defined by separate pump units. The pump units may define different stages of a multi-stage pump. The pump assembly may comprise a rotodynamic pump assembly. The pump assembly may comprise a positive displacement pump assembly, such as a piston pump. The pump assembly may comprise a submersible pump. A submersible pump may permit fluid within the tubing being reshaped to be utilised to inflate the bladder during reshaping.

The fluid control module may be configured to at least partially deflate or collapse the bladder. The fluid control module may be configured to establish a vacuum within the bladder. At least partially deflating or collapsing the bladder may assist the insertion of the bladder into a deformed tubing section. The fluid control module may be configured to partially inflate the bladder prior to or during insertion into a deformed tubing section. Such partial inflating may provide a degree of stiffness to the reshaping module to assist in insertion.

The fluid control module may comprise a plurality of pumps configured to provide different pump duty outputs. The plurality of pumps may define different components of a common pump assembly. In one embodiment the fluid control module may comprise at least one higher pressure pump or pump unit/stage and at least one lower pressure pump or pump unit/stage. The lower pressure pump may be configured to establish a vacuum within the bladder, for example to collapse the bladder. The lower pressure pump may be configured to provide initial inflation of the bladder. The higher pressure pump may be configured to expand the bladder and/or to pressurise the bladder, for example following initial inflation by the lower pressure pump.

The fluid control module may be configured to pressurise the bladder to a pressure suitable for the specific application.

For example, the fluid control module may be configured to pressurise the bladder to at least 10 MPa.

The fluid control module may be configured to pressurise the bladder to a pressure in the range of 15 MPa to 150 Mpa.

The bladder may be configured to accommodate pressure in the range 15 MPa to 150 MPa.

The reinforcing structure may comprise a hose. The reinforcing structure may comprise a sheath.

The reinforcing structure may be configured to provide a desired burst strength. For example, the bladder may independently define a burst strength which is lower than that of the reinforcing structure. In embodiments of the invention the bladder may be configured for fluid containment, and the reinforcing structure may be configured for providing a desired mechanical strength.

The reinforcing structure may be configured to protect the bladder against contact with the pipe wall.

In some embodiments the apparatus may comprise a protection structure configured to protect at least one of the bladder and the reinforcing structure from damage or the like during use, for example during contact with a deformed tubing section. Such a protection structure may assist or facilitate easier insertion into a deformed tubing section, for example by defining a relatively lower frictional coefficient, for example relative to the reinforcing structure and/or bladder.

The bladder and the reinforcing structure may be independently connected to the fluid control module.

The apparatus comprises a connection arrangement for securing one or both of the bladder and reinforcing structure to the apparatus. The connection arrangement may be configured for securing end regions, such as open end regions, of one or both of the bladder and reinforcing structure to the apparatus. The connection arrangement may permit one or both of the bladder and the reinforcing structure to be secured to the fluid control module, for example directly or indirectly secured. Such indirect securing may be achieved via a fluid communication conduit, which may permit the fluid control module to be located remotely from the reshaping module. In one embodiment the connection arrangement may permit fluid communication between the fluid control module and the bladder. For example, the connection arrangement may define a port, conduit, channel or the like extending therethrough.

The bladder and reinforcing structure may be secured to the apparatus via a common connection arrangement. The bladder and reinforcing structure may be secured to the apparatus via different connection arrangements.

The connection arrangement may comprise a connection member, to which connection member one or both of the bladder and reinforcing structure are secured. In some embodiments the connection arrangement may comprise separate connection members for securing to the bladder and reinforcing structure, respectively. For example, the reinforcing structure may be secured to the connection arrangement via a first connection member and the bladder may be secured to the connection arrangement via a second connection member. The second connection member may be located axially from the first connection member, such as axially adjacent. The second connection member may be located radially from the first connection member, such as radially adjacent and/or concentric.

In other embodiments the connection arrangement may comprise a single connection member to which both the bladder and reinforcing structure are secured.

The bladder and reinforcing structure may be configured to be secured to separate portions of a common connection member. For example, in some embodiments the bladder may be secured to a distal or downstream end of a connecting member, and the reinforcing structure may be secured to a proximal or upstream end of the connecting member. Such an arrangement may permit the reinforcing structure to at least partially cover the bladder in the region of the bladder connection.

The connection arrangement may be configured to clamp one or both of the bladder and reinforcing structure. For example, one or both of the bladder and reinforcing structure may be clamped to a connection member.

The connection arrangement may define a clamping arrangement. A common clamping arrangement may be provided to clamp both the bladder and the reinforcing structure. Individual clamping arrangements may be provided for clamping the bladder and reinforcing structure, respectively.

The connection arrangement defines a tapered clamping arrangement configured to clamp an end portion of the reinforcing structure thereto. In this arrangement the connection arrangement defines a tapered clamping surface, such as a conical surface, against which the reinforcing structure is clamped. The tapered clamping surface may be formed or defined on a connection member of the connection arrangement. Providing a tapered clamping surface may increase an achievable retaining force for retaining the reinforcing structure in place.

The tapered clamping surface may be defined on an outwardly facing surface. In such an arrangement the reinforcing structure may be located, at least partially, externally of the tapered clamping surface. The tapered clamping surface may be defined on an inwardly facing surface. In such an arrangement the reinforcing structure may be located, at least partially, internally of the tapered clamping surface.

The tapered clamping surface may define a tapered angle relative to a central axis of the connection member of less than or equal to 10°, for example less than or equal to 5°, less than or equal to 4°, less than or equal to 3°, less than or equal to 2°, less than or equal to 1°, or the like.

The connection arrangement may comprise a clamping member configured to clamp or press the reinforcing structure against the clamping surface, for example a clamping surface formed on a connection member. Axial displacement of the clamping member relative to the tapered clamping surface may selectively establish or remove clamping of a portion of the reinforcing structure located therebetween.

The clamping member may be defined by a substantially annular or circumferential structure, such as a clamping ring or the like. The clamping member may be defined by a wedge structure. The clamping member may be defined by one or more collet members. A single clamping member may be provided. A plurality of clamping members may be provided, for example a plurality of circumferentially arranged members, a plurality of axially arranged members or the like.

The tapered clamping surface may exhibit an axial length to diameter ratio in the range of, for example 2 to 10. Such a ratio may be determined at a minimum diameter of the tapered portion.

A diameter of the tapered clamping surface may increase in a direction towards a distal end of the apparatus.

The tapered clamping surface may comprise a surface configured to have increased friction with the reinforcing structure. For example, the tapered portion may comprise an increased surface roughness, such as may be achieved by a machining process, coating process, chemical process or the like.

An end portion of the reinforcing structure may be reversed, for example inverted, everted or the like, wherein the reversed portion is secured relative to the connection arrangement. Such an arrangement may be used in combination with clamping or otherwise securing a further region, such as a region adjacent to the reversed portion, of the reinforcing structure.

In one embodiment an end portion of the reinforcing structure may be reversed, for example inverted or everted, to at least partially cover a clamping member used to clamp or press a portion of the reinforcing structure, such as a portion proximate or adjacent to the reversed portion, against a clamping surface, such as a tapered clamping surface. In such an arrangement the reversed portion may be clamped to be secured in place. For example, the reversed portion may be clamped against the clamping member, for example by a further clamping member.

The connection arrangement may comprise a clamping force application arrangement configured to apply a clamping force to clamp the reinforcing member. The clamping force application arrangement may comprise a threaded structure, such as a nut arrangement. In one embodiment the clamping force application arrangement may comprise a collar assembly configured to apply an actuation force, such as an axial actuation force, against one or more clamping members.

The reinforcing structure may comprise a plurality of individual fibres or yarns, wherein the fibres in at least an end portion of the reinforcing structure may be at least partially embedded within a matrix structure to define a fused connection structure configured for use in connecting the reinforcing structure to a connection arrangement. The fused connection structure may define a connecting profile. The connecting profile may define a quick connecting profile, such as a nipple structure or the like. The connecting profile may define a threaded feature configured to permit the reinforcing structure to be threadably connected to a connection arrangement. For example, a threaded feature may be directly formed in the fused connection structure. A threaded insert may be secured, such as by bonding, to the fused connection structure.

The matrix structure may comprise a resin, thermoplastic material, thermoset material or the like.

The bladder may be secured to a bladder mounting portion of a connection arrangement, such as a bladder mounting portion of a connection member. For example, an end portion, such as an open end portion of the bladder may be secured to a bladder mounting portion of the connection arrangement. The bladder mounting portion may be substantially cylindrical. The bladder mounting portion may be tapered.

The bladder mounting portion may comprise at least one rib structure configured to assist retention of the bladder on the bladder mounting portion. At least one rib may extend substantially circumferentially, and configured to minimise relative axial movement of the bladder and the bladder mounting portion. At least one rib may extend substantially helically.

The bladder may be clamped against the bladder mounting portion, for example by use of a radial clamping ring, such as a heat shrink clamping ring. In such an arrangement the radial clamping ring may also clamp a portion of the reinforcing member.

The clamping ring may comprise at least one rib.

The bladder may be sealed to the connection arrangement.

The reinforcing structure may extend over the bladder mounting portion.

The reinforcing structure may be formed over the bladder.

The connection arrangement may comprise an outer clamping ring configured to clamp against the reinforcing structure and the bladder, and any other associated clamping arrangements. Such an outer clamping ring may provide global clamping within the connection arrangement. The outer clamping ring may define a shrink fit clamping ring. Alternatively, the outer clamping ring may be mechanically adjustable to effect clamping.

At least a portion of the reinforcing structure may be configured to slide relative to the bladder. Allowing the reinforcing structure to slide with respect to the bladder may permit the bladder and the reinforcing structure to expand and/or contract differently.

The reinforcing structure may be at least partially bonded to the bladder.

The reinforcing structure may be mounted over the bladder.

The reinforcing structure may comprise a plurality of individual elements, such as elongate elements, for example strands, yarns, fibres, filaments or the like.

The elements may be configured to contribute to the strength of the reinforcing structure, for example the hoop strength, axial strength or the like.

The elements may be braided, woven, knitted or the like.

The reinforcing structure may comprise multiple high strength materials.

The reinforcing structure may comprise glass.

The reinforcing structure may comprise ultra high molecular weight polyethylene (UHMW-PE).

The reinforcing structure may comprise carbon.

The reinforcing structure may comprise nano-tubes.

The elements may be applied around a core material.

The elements may be spirally wound.

The reinforcing structure may comprise multiple layers. For example, the reinforcing structure may comprise an inner sleeve located inside an outer sleeve. The multiple layers may be formed, for example by braiding, weaving, knitting or the like in a single step, or in separate steps, for example sequentially.

The number of elements may be proportional to the diameter of the reinforcing structure and/or a target mechanical characteristic, such as longitudinal strength.

The elements may be formed or arranged on a circular weaving loom. This may permit a seamless reinforcing hose structure to be produced.

The elements may be anisotropic. For example, the elements may have different properties in longitudinal and radial directions.

The elements may have substantially the same or varying thickness throughout the reinforcing structure.

The number of elements in a longitudinal direction of the reinforcing structure may be equal to or less than the number of elements in a radial direction.

The elements may be two-dimensionally braided.

The elements may be overbraided. For example, the reinforcing structure may be braided over a core tube.

The reinforcing structure may be formed over the bladder.

The reinforcing structure may be formed into a sock form.

The reinforcing structure may be formed in tube form, wherein one end is closed by a closure arrangement to define a sock form. The closure arrangement may comprise a clamping arrangement, bonding arrangement, fusing arrangement, stitched arrangement or the like.

The forming of the reinforcing structure may be optimised to provide axial strength. For example, at least one braiding angle may be configured to provide longitudinal strength.

The braiding angle may be between 0° and 90°.

The braiding angle may be between 30° and 40°.

The braiding angle may be 35°. The braiding angle may be 54°.

The braiding angle may vary longitudinally along the reinforcing structure. The braiding angle may vary along the reinforcing structure in accordance with desired mechanical properties.

The bladder may comprise a substantially longitudinal portion and a sealed end portion. For example, the bladder may define a sock structure.

The reshaping module may comprise a symmetric portion.

The reshaping module may comprise an asymmetric portion. For example, the bladder and/or reinforcing structure may comprise a cross-sectional profile configured to bias the reshaping module towards a predetermined configuration, such as a predetermined collapsed configuration. A predetermined configuration, such as a substantially flat collapsed configuration, may permit the reshaping module to be inserted into a flattened tubing section.

The reshaping module may be configured to rotate, for example relative to the fluid control module.

The apparatus may be configured to plug, for example seal the tubing.

The apparatus may be configured to be propelled by a remotely supplied fluid, such as fluid flowing in the deformed tubing.

The apparatus may be configured to be expanded by a remotely supplied fluid.

The apparatus may be chemically resistant. For example, the apparatus may comprise materials resistant to hydrocarbons, such as oil.

The apparatus may comprise an anchoring arrangement configured to anchor the apparatus within a tubing section. This may assist to hold the apparatus in place during a reshaping procedure. The anchoring arrangement may comprise one or more slips or the like.

The apparatus may comprise a centralising arrangement configured to centralise the apparatus within a tubing section.

The apparatus may comprise an internal reinforcement. Such reinforcement may assist to facilitate insertion of the apparatus into a deformed tubing section, for example by minimising the risk of adverse deformation, such as flipping over or the like, which may result in snagging of the apparatus, damage or the like. For example, the apparatus may comprise a stiff structure extending internally of the bladder. Such a stiff structure may comprise a bar, rod, or the like. The stiff structure may extend between opposing end supports, such that the stiff structure is supported at opposing ends. In an alternative arrangement the stiff structure may define a cantilever, for example supported at a single end. The internal reinforcement may be mounted on a connection arrangement to which the bladder and/or reinforcing structure are connected.

According to a third arrangement there is provided a tubing reshaping apparatus for use in reshaping a deformed tubing section, comprising:
a reshaping module configured to be located within a deformed tubing section and comprising an inflatable bladder to be inflated by application of fluid pressure to expand and reshape the deformed tubing section, wherein the reshaping module further comprises a reinforcing structure associated with the inflatable bladder; and
a connection arrangement defining a tapered clamping surface against which the reinforcing structure is clamped, wherein the tapered clamping surface defines a taper angle relative to a central axis of the connection member of less than or equal to 10°.

Features defined above in relation to the second aspect may be applied to the third arrangement.

According to a fourth arrangement there is provided a tubing reshaping apparatus for use in reshaping a deformed tubing section, comprising:
a reshaping module configured to be located within a deformed tubing section and comprising an inflatable bladder to be inflated by application of fluid pressure to expand and reshape the deformed tubing section, wherein the reshaping module further comprises a reinforcing structure associated with the inflatable bladder; and a connection arrangement configured for securing the reinforcing structure thereto, wherein an end region of the reinforcing structure is reversed and said reversed portion is secured via the connection arrangement.

Features associated with the second aspect may be applied to the fourth arrangement.

According to a fifth arrangement there is provided a tubing reshaping apparatus for use in reshaping a deformed tubing section, comprising:
a reshaping module configured to be located within a deformed tubing section and comprising an inflatable bladder to be inflated by application of fluid pressure to expand and reshape the deformed tubing section, wherein the reshaping module further comprises a reinforcing structure associated with the inflatable bladder;
wherein the reinforcing structure comprises a plurality of individual elements and said elements in at least an end portion of the reinforcing structure are at least partially embedded within a matrix structure to define a fused connection structure configured for use in connecting the reinforcing structure to a connection arrangement.

Features associated with the second aspect may be applied to the fifth arrangement.

Other aspects of the present invention relate to the use of the apparatus according to the appended claims.

It will be appreciated that one or more embodiments/aspects may be useful in reshaping a deformed tubing section.

### BRIEF DESCRIPTION OF THE DRAWINGS

These and other aspects of the present invention will now be described, by way of example only, with reference to the accompanying drawings, in which:
Figure 1 is a schematic representation of an apparatus for use in reshaping deformed tubing;
Figure 2 shows a longitudinal cross-sectional representation of a reshaping module of the apparatus of Figure 1;
Figure 3 shows a longitudinal cross-sectional representation of a modified embodiment a reshaping module for use in the apparatus of Figure 1;
Figure 4a shows a longitudinal cross-sectional representation of the reshaping module of Figure 2 in exemplary use in a collapsed configuration located in a discrete section of deformed tubing;
Figure 4b shows a longitudinal cross-sectional representation of the reshaping module of Figure 2 in exemplary use in an expanded configuration located in the discrete section of deformed tubing;
Figure 5a shows a longitudinal cross-sectional representation of the reshaping module of Figure 2 in another exemplary use in a collapsed configuration located in a continuous section of deformed tubing;
Figure 5b shows a longitudinal cross-sectional representation of the reshaping module of Figure 2 in another exemplary use in an expanded configuration located in the continuous section of deformed tubing;
Figure 6 shows a longitudinal cross-section of a detail of a connection between a reshaping module and a fluid control module of a tubing reshaping apparatus in accordance with an embodiment of the present invention;
Figure 7 shows a longitudinal cross-section of a detail of an alternative embodiment of a connection between a reshaping module and a fluid control module of a tubing reshaping apparatus;
Figure 8 shows a longitudinal cross-section of a detail of another alternative embodiment of a connection between a reshaping module and a fluid control module of a tubing reshaping apparatus; and
Figure 9 illustrates a modified embodiment of a tubing reshaping tool in accordance with the present invention.

### DETAILED DESCRIPTION OF THE DRAWINGS

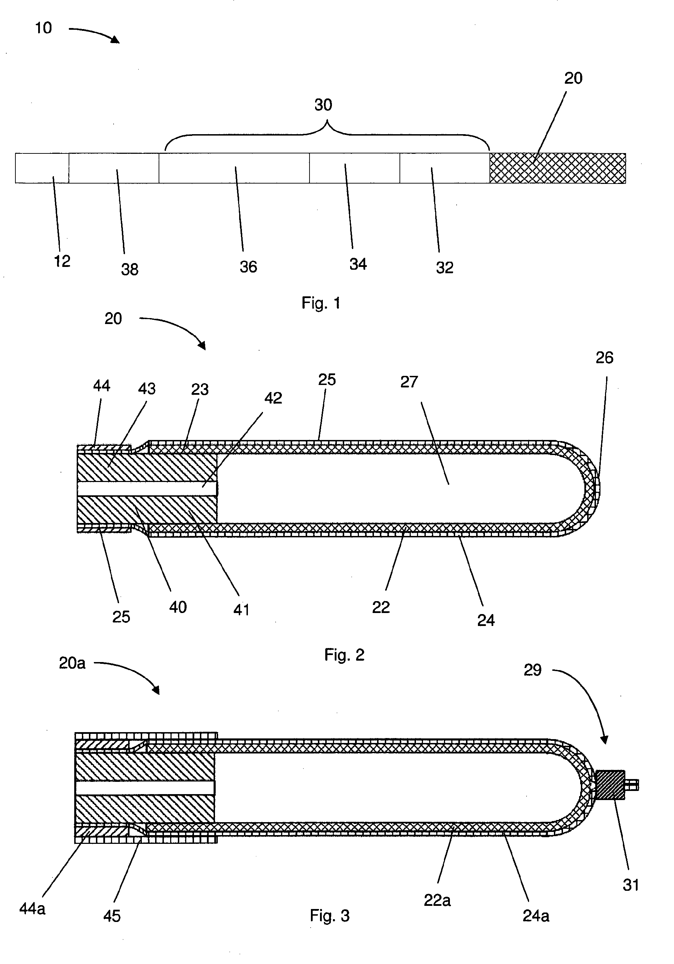

Reference is first made to Figure 1 in which there is shown a tubing reshaping apparatus 10 in accordance with an embodiment of the present invention for use in reshaping a deformed tubing section. The apparatus 10 comprises a reshaping module 20 located at a leading end of the apparatus 10 and a fluid control module 30 configured for controlling inflation of the reshaping module 20. In use, the apparatus 10 is configured to reshape a section of tubing which has been subject to deformation, for example radial deformation. Reshaping is achieved by locating the apparatus 10 within a deformed tubing section and selectively inflating the reshaping module 20 by use of the fluid control module 30.

The fluid control module 30 is directly coupled to the reshaping module 20 and comprises a low pressure pump 32 and a high pressure pump 34. The fluid control module 30 further comprises a fluid reservoir 36 containing a fluid, such as mineral oil, for use in expanding the reshaping module 20. The fluid control module 30 is configured so that the pumps 32, 34 selectively transfer fluid between the fluid reservoir 36 and the reshaping module 20 to selectively inflate or deflate the reshaping module 20. The apparatus 10 comprises an electronics module 38 for controlling the pumps 32, 34. The electronics module 38 may also include a power supply, a remote data communication facility and a position measurement system. In some embodiments the electronics module 38 may be provided as part of the fluid control module 30.

The tubing reshaping apparatus 10 further comprises an interface 12 for connection to other apparatus (not shown), such as to a downhole tractor, coiled tubing, wireline or the like. Such further apparatus may be configured for deployment and retrieval of the apparatus 10 from a tubing string or pipe line. In other embodiments the apparatus 10 may be piggable, propelled by fluid in the tubing.

Figure 2 provides a diagrammatic illustration of an exemplary embodiment of the reshaping module 20 of Figure 1. The reshaping module 20 comprises an inflatable bladder 22 and a reinforcing structure or hose 24 which surrounds the bladder 22. In some embodiments a protective structure 25, such as a sheath may surround the reinforcing hose 24. The protective structure 25 may function to protect the bladder 22 and hose 24 from direct contact with a deformed tubing section, and may also be provided with a suitable frictional coefficient to assist with insertion of the apparatus 10 within a tubing section. As the reshaping module 20 is located at the leading end of the apparatus 10, the bladder 22 and the hose 24 are sock-shaped such that a nose 26 of the hose 24 defines a leading edge of the apparatus 10.

In a modified embodiment, which is illustrated in Figure 3, a reshaping module 20a may include a reinforcing structure 24a which is initially formed with an open end 29 which is subsequently closed using a closure arrangement 31, such as a clamp assembly.

In the embodiment shown in Figure 2, the bladder 22 comprises a strong elastomer, such as rubber. The hose 24 is defined by a fibre structure, which may be braided, woven, knitted or the like into a form corresponding to the desired expanded form of the bladder 22. The hose 24 may be, for example, formed by braiding yarns around a core corresponding to the desired expanded form of the bladder 22. In another embodiment the hose 24 may be formed by braiding yarns around the bladder 22 whilst the bladder 22 is in an inflated configuration; however a temporary support member, such as a wax insert, may be used to support the bladder during braiding around the bladder 22.

Both the bladder 22 and the hose 24 are connected to a common connection member 40. An open end 23 of the bladder 22 is secured to a first connection portion 41 of the connection member 40. An open end 25 of the hose 24 is secured to a second connection portion 43 of the connection member 40 by a hose clamping ring 44. The connection member 40 comprises an axial passage 42 which provides fluid communication between the fluid control module 30 and an internal cavity 27 defined by the bladder 22.

In a modified embodiment as illustrated in Figure 3, the reshaping module 20a includes a further outer clamping ring 45 which extends over and clamps against the region of both the bladder 22a and reinforcing structure 24a, and also any associated connection arrangements, such as clamping ring 44a.

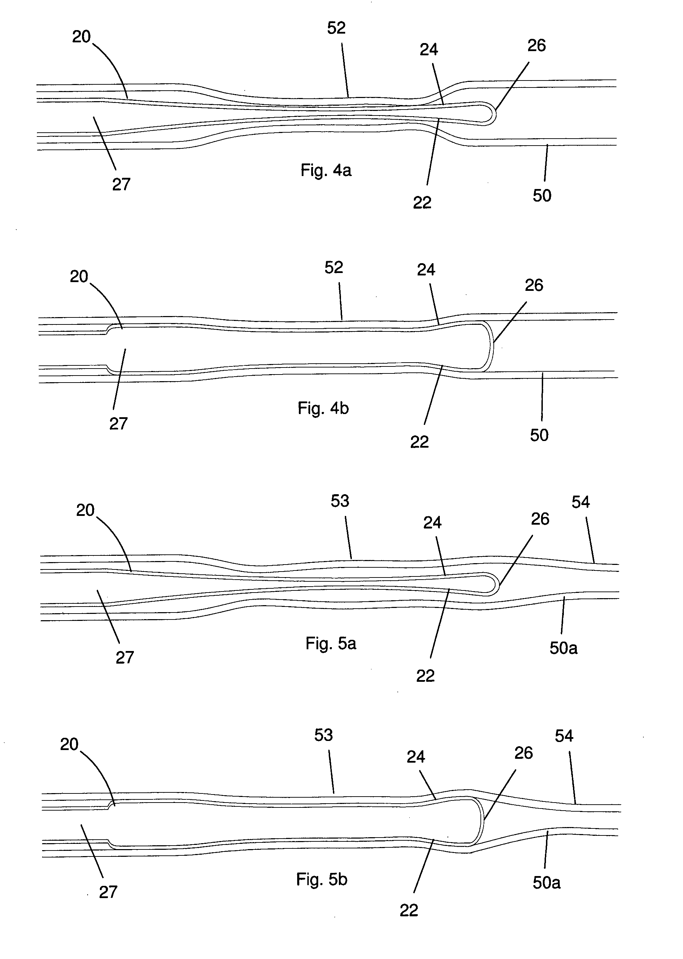

Exemplary uses of the apparatus 10 described above will now be described with reference to Figures 4 and 5. Figure 4a shows the reshaping module 20 in use located in a discrete section 52 of a deformed tubing 50. The deformed tubing 50 forms part of a tubing string and the apparatus 10 is used to reshape the tubing 50 in situ. However, the apparatus 10 is suitable for reshaping tubing that has been retrieved from a tubing string.

The apparatus 10 is inserted into the tubing 50 and the fluid control module 30 is operated to evacuate fluid from the bladder 22 such that the reshaping module 20 is in a collapsed configuration and is able to enter and entirely pass through the deformed section 52, as shown in Figure 4a. Evacuating the bladder 22 in this way may permit insertion in extremely restricted deformed sections. However, in other uses the bladder 22 may be partially inflated, which may provide a degree of stiffness which might be useful in aiding inserting. Once in the configuration of Figure 4a, the reshaping module 20 may be expanded in a two-stage procedure. The low pressure pump 32 is activated to pump fluid from the reservoir 36 into the cavity 27, thus initially inflating the bladder 22, and then the high pressure pump 34 is activated to subsequently increase the pressure in the bladder 22, thus expanding the reshaping module 20 and pressing against the interior of the deformed section 52 as shown in Figure 4b. The pressure in the bladder 22 is converted to a pressure on the interior of the deformed section 52, resulting in the reshaping of the deformed section 32 as illustrated in Figure 4b. The hose 24 prevents the bladder 22 being damaged, for example by over inflation. More specifically, during reshaping radial forces will be carried by the tubing section 52, and upon reaching the limit of reshaping, which is dictated by the reinforcing structure, the reinforcing structure will then carry the radial loads, such that the bladder is supported at all times during reshaping.

The tubing 50 is reshaped to a form substantially corresponding to the form of the tubing 50 prior to deformation. Upon the completion of the reshaping of the deformed section 52, the pressure in the bladder 22 is reduced by transferring fluid back to the fluid reservoir 36 and the bladder 22 is at least partially deflated for retrieval of the apparatus 10 or movement of the apparatus 10 to a further deformed section, such as beyond the reshaped deformed section 52.

Figure 5a shows the reshaping module 20 located in a continuous section of deformed tubing 50a. The apparatus 10 is inserted into a deformed section of the tubing 50a in a procedure similar to that described above for Figure 4a. However, the deformed section is longer than the reshaping module 20 such that the reshaping module only spans a first deformed portion 53 of the deformed section in the configuration of Figure 5a. Once in the configuration of Figure 5a, the first deformed portion 53 is reshaped in a procedure similar to that described above for Figure 4a. Upon the reshaping of the first deformed portion 53, the apparatus 10 is returned to the collapsed configuration of Figure 5a using the low pressure pump 32. In the collapsed configuration, the apparatus 10 is able to pass through the reshaped first deformed portion 53 further into the tubing 50a to a second deformed portion 54. At the second deformed portion 54, the reshaping procedure for the first deformed portion 53 is repeated. In this fashion, continuous lengths of deformed tubing 50 may be reshaped in stages.

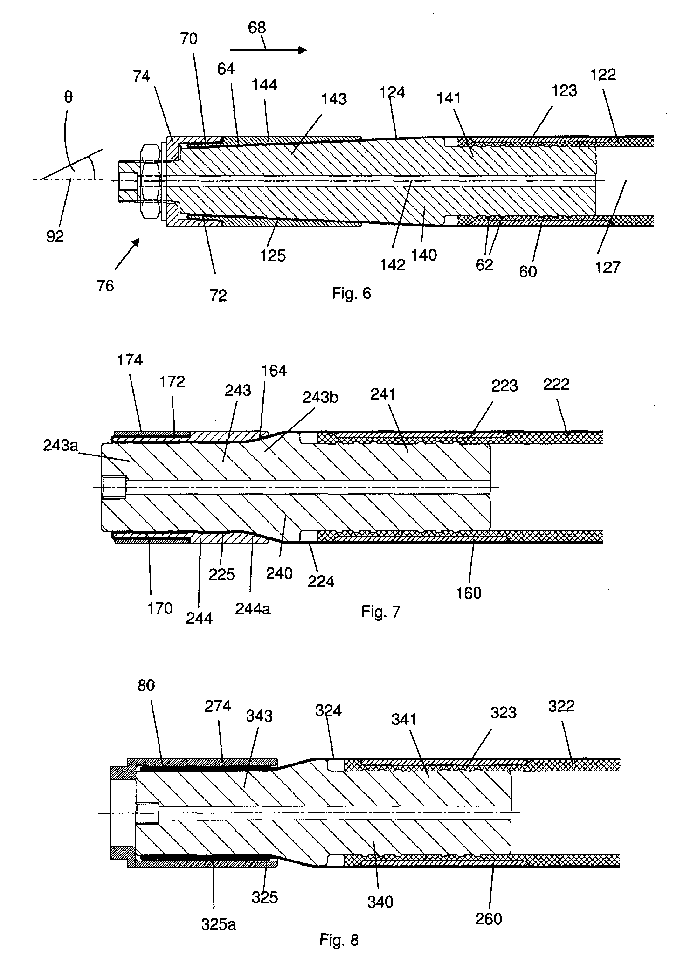

Figure 6 shows a longitudinal cross-section in the region of a connection arrangement between the reshaping module 20 and the fluid control module 30 of the apparatus 10 of Figure 1. The connection arrangement shown in Figure 1 is generally similar to that shown in Figure 2, and as such like components share like reference numerals, incremented by 100.

The connection arrangement comprises a connection member 140 which defines a longitudinal throughbore 142 which provides fluid communication between the fluid control module 30 (not shown in Figure 6) and an internal cavity 127 of an inflatable bladder 122. In this respect an open end 123 of the bladder 122 is mounted over a first connection portion 141 of the connection member 140, which is cylindrical in form, and the bladder 122 is clamped thereto by a shrink fitted clamping ring 60. An outer surface of the cylindrical connection portion 141 includes a number of annular ribs 62 which function to assist retention of the open end 123 of the bladder 122.

A reinforcing structure in the form of a hose 124 is mounted over the outer surface of the bladder 122, and extends to cover the cylindrical connection portion 141 of the connection member 140. The reinforcing hose 124 is mounted such that an open end region 125 of the hose 124 is located adjacent and surrounds a second connection portion 143 of the connection member 140, which in the present embodiment defines a tapered connection portion. The tapered portion 143 includes a tapered surface 64, which in the embodiment shown defines a taper angle θ with respect to a longitudinal axis 66 of the connection member 140 in the region of 2.5°. The connection arrangement further comprises a wedge shaped securing or clamping ring 144 which is translated axially in the direction of arrow 68 to clamp the reinforcing hose 124 against the tapered surface 64 of the connection member 140. In some embodiments of the invention such a clamping arrangement may be sufficient to ensure the reinforcing hose 124 is retained on the connection member 140. However, to increase the retention forces applied on the reinforcing hose 124, in the present embodiment a terminating open end portion 70 of the hose is everted and pulled back to cover an end region 72 of the clamping ring 144, wherein a clamping collar or cap 74 is provided to clamp the everted portion 70 of the hose 124. In the present embodiment a nut arrangement 76 is provided to press the clamping cap 74 against the clamping ring 144, and in turn the clamping ring 144 against the tapered surface 64, thus effecting clamping of an interposed region of the hose 124.

Figure 7 shows a longitudinal cross-section of a detail of an alternative embodiment of a connection arrangement for the reshaping module 20. The arrangement shown in Figure 7 is similar to that shown in Figure 6, and as such like features share like reference numerals, incremented by 100. Accordingly, the connection arrangement of Figure 7 includes a connection member 240 which includes a first connection portion 241 which is generally cylindrical in form and to which an open end 223 of an inflatable bladder 222 is mounted and secured via a shrink fitted clamping ring 160. A reinforcing hose structure 224 is mounted over the bladder 222 and the cylindrical connection portion 241, and an open end region 225 extends to cover a second connection portion 243, which includes both a cylindrical portion 243a and a tapered portion 243b, wherein the tapered portion 243b includes a tapered surface 164. A hose clamping ring 244 is provided to clamp the reinforcing hose 224 against the tapered surface 164 of the second connection portion 243. In this respect an end portion 244a of the hose clamping ring 244 defines a wedge profile to establish clamping of the hose against the tapered surface 164.

A terminating end region 170 of the hose structure 224 is everted and pulled back over an end region 172 of the clamping ring 244 and is clamped thereto using a further clamping ring 174, such as a heat shrink clamping ring. Accordingly, clamping the hose structure 174 at multiple locations, and by use of eversion of the hose 174 permits a robust and high strength connection to be achieved.

Figure 8 shows a longitudinal cross-section of a detail of another alternative embodiment of a connection arrangement for the reshaping module 20. The arrangement shown in Figure 8 is similar to that shown in Figure 7, and as such like features share like reference numerals, incremented by 100. Accordingly, the connection arrangement of Figure 8 includes a connection member 340 which includes a first connection portion 341 which is generally cylindrical in form and to which an open end 323 of an inflatable bladder 322 is mounted and secured via a shrink fitted clamping ring 260.

A reinforcing hose structure 324 is mounted over the inflatable bladder 322 and covers the cylindrical connection portion 341 of the connection member 340, and an open end region 325 extends to cover a second connection portion 343, which is also generally cylindrical in form. In the present embodiment the end region 325 of the hose 324 is encapsulated in a matrix material, such as a thermoplastic material or a resin, to provide a fused connection portion 325a. A thread 80 is provided on the fused connection portion 325a, specifically on an outer surface thereof. An internally threaded securing cap 274 is provided and is threadably coupled to the fused connection portion 325a, thus securing the hose structure 324 relative to the connection member 340.

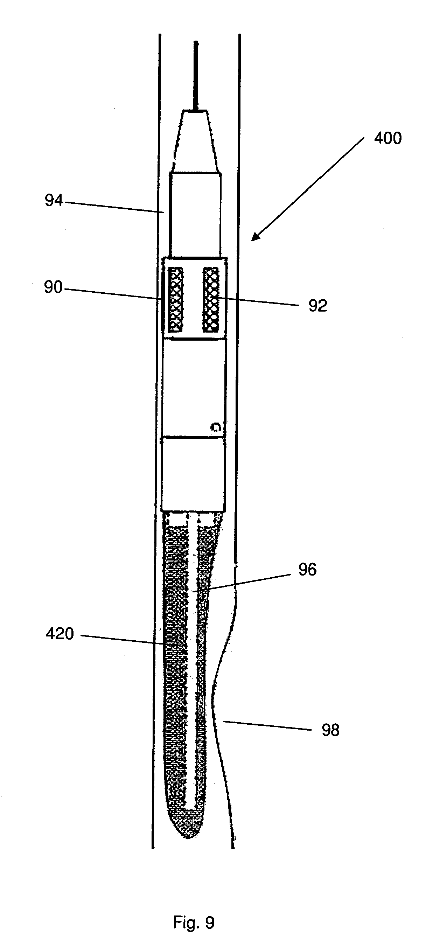

Reference is now made to Figure 9 in which a further alternative embodiment of a tubing reshaping apparatus is shown. The apparatus, which is generally identified by reference numeral 400, is similar to that shown in Figures 1 and 2 and as such like components share like reference numerals, incremented by 400. As the structure and operation of the embodiment shown in Figure 9 is similar to that shown in Figures 1 and 2, only the differences will be highlighted. In this respect the apparatus 400 further includes an anchor module 90 which includes a plurality of slips 92 for use in anchoring the apparatus 400 within a tubing or tubular 94. Furthermore, the apparatus 400 includes a reinforcing bar or rod 96 located internally of the reshaping module 420. This reinforcing bar or rod 96 assist insertion of the reshaping module 420 within a deformed tubing section 98 while minimising or preventing flipping or other undesired deformation of the reshaping module.

It should be understood that the embodiments described herein are merely exemplary and that various modifications may be made thereto without departing from the scope of the invention. For example, although shown here for connection to other apparatus such as a tractor or coiled tubing, the apparatus itself may be piggable. In alternative embodiments, the hose and the bladder may be independently connected, such as to separate connection members. Further, in each embodiment the reinforcing structure is mounted over the bladder. However, in alternative embodiments at least a portion of the reinforcing structure may be mounted internally of the bladder, and/or embedded within the bladder. Also, in the arrangement shown in Figure 8 a thread is provided directly on the fused connection portion. However, in alternative embodiments the thread may be provided by a suitable insert. Also, with respect to the tapered clamping surface, a taper angle of, for example, less than or equal to 10° may be selected. Further, in some embodiments the fluid control module may be provided remotely from the reshaping module, for example externally of a tubing or tubular. Also, the electronics module may be provided remotely from the reshaping module.

## Claims

1. A method for use in reshaping a deformed tubing section, comprising:
locating an inflatable bladder (22;122;222;322) with an associated reinforcing structure (24;124;224;324) of a tubing reshaping apparatus (10) within a deformed tubing section while the inflatable bladder (22;122;222;322) is in a collapsed configuration, the apparatus (10) comprising a connection arrangement for securing one or both of the bladder (22;122;222;322) and reinforcing structure to the apparatus, wherein the connection arrangement defines a tapered clamping surface (64;164) configured to permit clamping of an end portion (70; 170) of the reinforcing structure (24;124;224;324) thereto; and
inflating the inflatable bladder (22;122;222;322)with a fluid to radially expand said bladder (22;122;222;322) to reshape the deformed tubing section.

2. The method of claim 1, comprising at least partially collapsing the inflatable bladder (22;122;222;322) prior to or during location of said bladder (22;122;222;322) within the deformed tubing section, or
partially inflating the bladder (22;122;222;322) during or prior to insertion of the bladder within a deformed tubing section.

3. The method according to claim 1 or 2, comprising mechanically restraining the bladder (22;122;222;322) with the reinforcing structure (24;124;224;324) such that expansion of the bladder is restricted, optionally at a diameter which substantially equals a desired diameter of the tubing section when reshaped.

4. The method according to any preceding claim, comprising transferring fluid between the bladder (22;122;222;322) and a fluid control module (30), and/or
cycling the bladder (22;122;222;322) between at least partially collapsed and expanded configurations.

5. The method according to any preceding claim, comprising reshaping the tubing section to a form substantially equivalent to a form prior to deformation.

6. A tubing reshaping apparatus (10) for use in reshaping a deformed tubing section, comprising:
a reshaping module (20;420) configured to be located within a deformed tubing section and comprising an inflatable bladder (22;122;222;322) to be inflated by application of fluid pressure to expand and reshape the deformed tubing section, and a reinforcing structure (24;124;224;324) associated with the inflatable bladder (22;122;222;322);
a connection arrangement for securing one or both of the bladder and reinforcing structure to the apparatus, wherein the connection arrangement defines a tapered clamping surface (64;164) configured to permit clamping of an end portion (70; 170) of the reinforcing structure thereto.

7. The apparatus according to claim 6, wherein the bladder is mechanically restrained by the reinforcing structure such that expansion of the bladder (22;122;222;322) is restricted, optionally to a diameter which corresponds to a desired reshaped diameter of the tubing section.

8. The apparatus according to claim 6 or 7, comprising a fluid control module (30) configured for controlling inflation of the reshaping module (20;420), optionally wherein the fluid control module (30) comprises at least one higher pressure pump or pump unit/stage (34) and at least one lower pressure pump or pump unit/stage (32), optionally wherein the lower pressure pump or pump unit/stage (32) is configured to establish a vacuum within the bladder (22;122;222;322), and/or to provide initial inflation of the bladder (22;122;222;322), and the higher pressure pump or pump unit/stage (34) is configured to expand the bladder (22;122;222;322) and/or to pressurise the bladder (22;122;222;322).

9. The apparatus according to any one of claims 6 to 8, wherein the connection arrangement is configured for securing open end regions of one or both of the bladder (22;122;222;322) and reinforcing structure (24;124;224;324) to the apparatus (10), and/or
wherein the bladder (22;122;222;322) and reinforcing structure (24;124;224;324) are secured to the apparatus (10) via a common connection arrangement.

10. The apparatus (10) according to any one of claims 6 to 9, wherein the connection arrangement comprises a connection member (40;140;240;340), to which connection member the bladder (22;122;222;322) and reinforcing structure are secured, optionally wherein the bladder (22;122;222;322) and reinforcing structure (24;124;224;324) are secured to separate portions of the connection member (40;140;240;340), optionally wherein the bladder (22;122;222;322) is secured to a distal or downstream side of the connecting member (40;140;240;340), and the reinforcing structure (24;124;224;324) is secured to a proximal or upstream side of the connecting member (40;140;240;340).

11. The apparatus according to any one of claims 6 to 10, wherein the connection arrangement comprises a clamping member configured to clamp or press the reinforcing structure against the clamping surface.

12. The apparatus (10) according to any one of claims 6 to 11, wherein an end portion (70; 170) of the reinforcing structure (24;124;224;324) is reversed, wherein a reversed portion is secured relative to the connection arrangement.

13. The apparatus (10) according to any one of claims 6 to 12, wherein the reinforcing structure (24;124;224;324) comprises a plurality of individual elements, wherein the elements in at least an end portion of the reinforcing structure are at least partially embedded within a matrix structure to define a fused connection structure (325a) configured for use in connecting the reinforcing structure (24;124;224;324) to the apparatus (10).

14. The apparatus according to any one of claims 6 to 13, wherein an open end portion (25;125;225;325) of the bladder is clamped against a bladder (22;122;222;322) mounting portion of the connection arrangement, and/or
wherein the tapered clamping surface (64;164) defines a taper angle relative to a central axis of the connection member of less than or equal to 10°.

15. Use of the apparatus according to any one of claims 6 to 14 in reshaping a deformed tubing section.

## Patentansprüche

1. Verfahren zur Verwendung beim Umformen eines verformten Rohrabschnitts, umfassend:
Anordnen einer aufblasbaren Blase (22;122;222;322) mit einer zugehörigen Verstärkungsstruktur (24;124;224;324) einer Rohrumfomivorrichtung (10) in einem verformten Rohrabschnitt, während sich die aufblasbare Blase (22;122;222;322) in einer kollabierten Konfiguration befindet, wobei die Vorrichtung (10) eine Verbindungsanordnung zum Befestigen der Blase (22;122;222;322) und/oder der Verstärkungsstruktur an der Vorrichtung umfasst, wobei die Verbindungsanordnung eine konisch zulaufende Klemmfläche (64;164) definiert, die dazu konfiguriert ist, das Klemmen eines Endabschnitts (70; 170) der Verstärkungsstruktur (24;124;224;324) daran zu ermöglichen; und
Aufblasen der aufblasbaren Blase (22;122;222;322) mit einem Fluid, um die Blase (22;122;222;322) radial auszudehnen, um den verformten Rohrabschnitt umzuformen.

2. Verfahren nach Anspruch 1, umfassend mindestens partielles Kollabieren der aufblasbaren Blase (22;122;222;322) vor oder während dem Anordnen der Blase (22;122;222;322) in dem verformten Rohrabschnitt, oder
partielles Aufblasen der Blase (22;122;222;322) während oder vor dem Einführen der Blase in einen verformten Rohrabschnitt.

3. Verfahren nach Anspruch 1 oder 2, umfassend das mechanische Einschränken der Blase (22;122;222;322) mit der Verstärkungsstruktur (24;124;224;324), sodass das Ausdehnen der Blase eingeschränkt wird, optional bei einem Durchmesser, der im Wesentlichen einem gewünschten Durchmesser des Rohrabschnitts, wenn er umgeformt ist, gleicht.

4. Verfahren nach einem der vorangehenden Ansprüche, umfassend das Übertragen von Fluid zwischen der Blase (22;122;222;322) und einem Fluidsteuermodul (30) und/oder
periodisches Überführen der Blase (22;122;222;322) zwischen einer mindestens teilweise kollabierten und einer ausgedehnten Konfiguration.

5. Verfahren nach einem der vorangehenden Ansprüche, umfassend das Umformen des Rohrabschnitts zu einer Form, die im Wesentlichen einer Form vor der Verformung entspricht.

6. Rohumformvorrichtung (10) zur Verwendung beim Umformen eines verformten Rohrabschnitts, umfassend:
ein Umformmodul (20;420), das dazu konfiguriert ist, in einem verformten Rohrabschnitt angeordnet zu werden und umfassend eine aufblasbare Blase (22;122;222;322), die durch Aufbringen von Fluiddruck aufzublasen ist, um den verformten Rohrabschnitt auszudehnen und umzuformen, und eine Verstärkungsstruktur (24;124;224;324), die mit der aufblasbaren Blase (22;122;222;322) assoziiert ist;
eine Verbindungsanordnung zum Befestigen der Blase und/oder der Verstärkungsstruktur an der Vorrichtung, wobei die Verbindungsanordnung eine konisch zulaufende Klemmfläche (64;164) umfasst, die dazu konfiguriert ist, das Klemmen eines Endabschnitts (70;170) der Verstärkungsstruktur daran zu ermöglichen.

7. Vorrichtung nach Anspruch 6, wobei die Blase mechanisch von der Verstärkungsstruktur eingeschränkt wird, sodass das Ausdehnen der Blase (22;122;222;322) eingeschränkt wird, optional auf einen Durchmesser, der einem gewünschten umgeformten Durchmesser des Rohrabschnitts entspricht.

8. Vorrichtung nach Anspruch 6 oder 7, umfassend ein Fluidsteuermodul (30), das zum Steuern des Aufblasens des Umformmoduls (20;420) konfiguriert ist, wobei optional das Fluidsteuermodul (30) mindestens eine Hochdruckpumpe oder -pumpeneinheit/-stufe (34) und mindestens eine Niederdruckpumpe oder -pumpeneinheit/-stufe (32) umfasst, wobei optional die Niederdruckpumpe oder -pumpeneinheit/-stufe (32) dazu konfiguriert ist, einen Unterdruck in der Blase (22;122;222;322) aufzubauen und/oder anfängliches Aufblasen der Blase (22;122;222;322) bereitzustellen, und die Hochdruckpumpe oder -pumpeneinheit/-stufe (34) dazu konfiguriert ist, die Blase auszudehnen (22;122;222;322) und/oder die Blase (22;122;222;322) mit Druck zu beaufschlagen.

9. Vorrichtung nach einem der Ansprüche 6 bis 8, wobei die Verbindungsanordnung dazu konfiguriert ist, offene Endregionen der Blase (22;122;222;322) und/oder der Verstärkungsstruktur (24;124;224;324) an der Vorrichtung (10) zu befestigen, und/oder
wobei die Blase (22;122;222;322) und die Befestigungsstruktur (24;124;224;324) über eine gemeinsame Verbindungsanordnung an der Vorrichtung (10) befestigt sind.

10. Vorrichtung (10) nach einem der Ansprüche 6 bis 9, wobei die Verbindungsanordnung ein Verbindungsglied (40;140;240;340) umfasst, wobei die Blase (22;122;222;322) und die Verstärkungsstruktur an diesem Verbindungsglied befestigt sind, wobei optional die Blase (22;122;222;322) und die Verstärkungsstruktur (24;124;224;324) an getrennten Abschnitten des Verbindungsglieds (40;140;240;340) befestigt sind, wobei optional die Blase (22;122;222;322) an einer fernen oder stromabwärtigen Seite des Verbindungsglieds (40;140;240;340) befestigt ist und die Verstärkungsstruktur (24;124;224;324) an einer nahen oder stromaufwärtigen Seite des Verbindungsglieds (40;140;240;340) befestigt ist.

11. Vorrichtung nach einem der Ansprüche 6 bis 10, wobei die Verbindungsanordnung ein Klemmglied umfasst, das dazu konfiguriert ist, die Verstärkungsstruktur an die Klemmfläche zu klemmen oder zu pressen.

12. Vorrichtung (10) nach einem der Ansprüche 6 bis 11, wobei ein Endabschnitt (70;170) der Verstärkungsstruktur (24;124;224;324) umgekehrt ist, wobei ein umgekehrter Abschnitt relativ zu der Verbindungsanordnung befestigt ist.

13. Vorrichtung (10) nach einem der Ansprüche 6 bis 12, wobei die Verstärkungsstruktur (24;124;224;324) eine Vielzahl von einzelnen Elementen umfasst, wobei die Elemente in mindestens einem Endabschnitt der Verstärkungsstruktur mindestens teilweise in einer Matrixstruktur eingebettet sind, um eine verschmolzene Verbindungsstruktur (325a) zu definieren, die zur Verwendung beim Verbinden der Verstärkungsstruktur (24;124;224;324) mit der Vorrichtung (10) konfiguriert ist.

14. Vorrichtung nach einem der Ansprüche 6 bis 13, wobei ein offener Endabschnitt (25;125;225;325) der Blase an einen Blasen(22;122;222;322)-Anbauabschnitt der Verbindungsanordnung geklemmt ist, und/oder
wobei die konisch zulaufende Klemmfläche (64;164) eine Konizität relativ zu einer mittleren Achse des Verbindungsglieds von weniger als oder gleich 10° definiert.

15. Verwendung der Vorrichtung nach einem der Ansprüche 6 bis 14 beim Umformen eines verformten Rohrabschnitts.

## Revendications

1. Procédé utilisable pour le reprofilage d'une section de tube de production déformée, comprenant les étapes consistant à :
positionner une vessie gonflable (22 ; 122 ; 222 ; 322) avec une structure de renforcement (24 ; 124 ; 224 ; 324) associée d'un appareil de reprofilage de tube de production (10) au sein d'une section de tube de production déformée pendant que la vessie gonflable (22 ; 122 ; 222 ; 322) est en configuration repliée, l'appareil (10) comprenant un agencement de raccordement permettant de fixer une ou les deux parmi la vessie (22 ; 122 ; 222 ; 322) et la structure de renforcement sur l'appareil, dans lequel l'agencement de raccordement définit une surface de blocage conique (64 ; 164) configurée pour permettre le blocage d'une partie extrémité (70 ; 170) de la structure de renforcement (24 ; 124 ; 224 ; 324) sur celle-ci ; et
gonfler la vessie gonflable (22 ; 122 ; 222 ; 322) avec un fluide afin de dilater radialement ladite vessie (22 ; 122 ; 222 ; 322) de manière à reprofiler la section de tube de production déformée.

2. Procédé selon la revendication 1, comprenant une étape consistant à replier au moins partiellement la vessie gonflable (22 ; 122 ; 222 ; 322) préalablement au ou pendant le positionnement de ladite vessie (22 ; 122 ; 222 ; 322) au sein de la section de tube de production déformée, ou
gonfler partiellement la vessie (22 ; 122 ; 222 ; 322) pendant ou préalablement à l'insertion de la vessie au sein d'une section de tube de production déformée.

3. Procédé selon la revendication 1 ou 2, comprenant une étape consistant à restreindre la vessie (22 ; 122 ; 222 ; 322) de manière mécanique avec la structure de renforcement (24 ; 124 ; 224 ; 324) de telle manière que la dilatation de la vessie est limitée, éventuellement à un diamètre qui est essentiellement égal à un diamètre souhaité de la section de tube de production une fois reprofilée.

4. Procédé selon l'une quelconque des revendications précédentes, comprenant les étapes consistant à transférer du fluide entre la vessie (22 ; 122 ; 222 ; 322) et un module de commande de fluide (30), et/ou
faire alterner la vessie (22 ; 122 ; 222 ; 322) entre des configurations au moins partiellement repliée et au moins partiellement dilatée.

5. Procédé selon l'une quelconque des revendications précédentes, comprenant une étape consistant à reprofiler la section de tube de production pour lui donner une forme essentiellement équivalente à une forme présentée préalablement à la déformation.

6. Appareil de reprofilage de tube de production (10) utilisable pour le reprofilage d'une section de tube de production déformée, comprenant :
un module de reprofilage (20 ; 420) configuré pour être positionné au sein d'une section de tube de production déformée et comprenant une vessie gonflable (22 ; 122 ; 222 ; 322) à gonfler par application d'une pression de fluide afin de dilater et de reprofiler la section de tube de production déformée, et une structure de renforcement (24 ; 124 ; 224 ; 324) associée à la vessie gonflable (22 ; 122 ; 222 ; 322) ;
un agencement de raccordement permettant de fixer une ou les deux parmi la vessie et la structure de renforcement sur l'appareil, dans lequel l'agencement de raccordement définit une surface de blocage conique (64 ; 164) configurée pour permettre un blocage d'une partie extrémité (70 ; 170) de la structure de renforcement sur celle-ci.

7. Appareil selon la revendication 6, dans lequel la vessie est restreinte de manière mécanique par la structure de renforcement de telle manière qu'une dilatation de la vessie (22 ; 122 ; 222 ; 322) est limitée, éventuellement à un diamètre qui correspond à un diamètre reprofilé souhaité de la section de tube de production.

8. Appareil selon la revendication 6 ou 7, comprenant un module de commande de fluide (30) configuré pour commander un gonflage du module de reprofilage (20 ; 420), éventuellement dans lequel le module de commande de fluide (30) comprend au moins une pompe ou unité/étage de pompage (34) haute pression et au moins une pompe ou unité/étage de pompage (32) basse pression, éventuellement dans lequel la pompe ou unité/étage de pompage (32) basse pression est configuré(e) pour créer un vide au sein de la vessie (22 ; 122 ; 222 ; 322), et/ou pour fournir un gonflage initial de la vessie (22 ; 122 ; 222 ; 322) et la pompe ou unité/étage de pompage (34) haute pression est configuré(e) pour dilater la vessie (22 ; 122 ; 222 ; 322) et/ou pour mettre la vessie (22 ; 122 ; 222 ; 322) sous pression.

9. Appareil selon l'une quelconque des revendications 6 à 8, dans lequel l'agencement de raccordement est configuré pour fixer des régions d'extrémité ouvertes d'une ou des deux parmi la vessie (22 ; 122 ; 222 ; 322) et la structure de renforcement (24 ; 124 ; 224 ; 324) sur l'appareil (10), et/ou
dans lequel la vessie (22 ; 122 ; 222 ; 322) et la structure de renforcement (24 ; 124 ; 224 ; 324) sont fixées sur l'appareil (10) via un agencement de raccordement commun.

10. Appareil (10) selon l'une quelconque des revendications 6 à 9, dans lequel l'agencement de raccordement comprend un élément de raccordement (40 ; 140 ; 240 ; 340) sur lequel sont fixées la vessie (22 ; 122 ; 222 ; 322) et la structure de renforcement, éventuellement dans lequel la vessie (22 ; 122 ; 222 ; 322) et la structure de renforcement (24 ; 124 ; 224 ; 324) sont fixées sur des parties séparées de l'élément de raccordement (40 ; 140 ; 240 ; 340), éventuellement dans lequel la vessie (22 ; 122 ; 222 ; 322) est fixée sur un côté distal ou aval de l'élément de raccordement (40 ; 140 ; 240 ; 340), et la structure de renforcement (24 ; 124 ; 224 ; 324) est fixée sur un côté proximal ou amont de l'élément de raccordement (40 ; 140 ; 240 ; 340).

11. Appareil selon l'une quelconque des revendications 6 à 10, dans lequel l'agencement de raccordement comprend un élément de blocage configuré pour serrer ou presser la structure de renforcement contre la surface de blocage.

12. Appareil (10) selon l'une quelconque des revendications 6 à 11, dans lequel une partie extrémité (70 ; 170) de la structure de renforcement (24 ; 124 ; 224 ; 324) est inversée, et dans lequel une partie inversée est fixée par rapport à l'agencement de raccordement.

13. Appareil (10) selon l'une quelconque des revendications 6 à 12, dans lequel la structure de renforcement (24 ; 124 ; 224 ; 324) comprend une pluralité d'éléments individuels, dans lequel les éléments présents dans au moins une partie extrémité de la structure de renforcement sont au moins partiellement intégrés au sein d'une structure formant matrice afin de définir une structure de raccordement fusionnée (325a) configurée pour être utilisée pour le raccordement de la structure de renforcement (24 ; 124 ; 224 ; 324) sur l'appareil (10).

14. Appareil selon l'une quelconque des revendications 6 à 13, dans lequel une partie extrémité ouverte (25 ; 125 ; 225 ; 325) de la vessie est bloquée contre une partie montage de la vessie (22 ; 122 ; 222 ; 322), appartenant à l'agencement de raccordement, et/ou
dans lequel la surface de blocage conique (64 ; 164) définit un angle de conicité inférieur ou égal à 10° par rapport à un axe central de l'élément de raccordement.

15. Utilisation de l'appareil selon l'une quelconque des revendications 6 à 14 pour le reprofilage d'une section de tube de production déformée.
